# EUROPÄISCHE PATENTSCHRIFT

(11) **EP 1 657 014 B1**
(45) Veröffentlichungstag und Bekanntmachung des Hinweises auf die Patenterteilung: **07.03.2007**
(21) Anmeldenummer: 05466017.0
(22) Anmeldetag: 14.11.2005
(51) Int. Cl.: B23D 77/00, B24B 33/08

(54) **Reibahle für löcher, insbesondere mit kleinem bis mittlerem durchmesser**
Reamer for holes, especially holes having a small to medium size diameter
Alésoir pour trous, en particulier de taille petite ou moyenne

(30) Priorität: 16.11.2004 CZ 200415988 U
(43) Veröffentlichungstag der Anmeldung: 17.05.2006
(73) Patentinhaber: Ham-Final S.r.o., 627 00 Brno (CZ)
(72) Erfinder: FIALA, Stanislav, 62 00 BRNO (CZ); DVORACEK, Jaroslav, 621 00 BRNO (CZ); VANEK, Vladimir, 617 00 BRNO (CZ)
(74) Vertreter: Malusek, Jiri

(56) Entgegenhaltungen:
- EP-A- 0 734 803
- DE-U1- 8 416 281
- US-A- 3 216 107
- US-A- 3 800 482
- US-A- 5 607 263
- US-A- 5 669 744
- US-A1- 2003 143 044

## Beschreibung

### Technischer Bereich

Die technische Lösung betrifft eine Reibahle für Löcher, insbesondere mit kleinem bis mittlerem Durchmesser nach dem Oberbegriff des Anspruchs 1. Eine solche Reibahle ist z.B. aus US 3 800 482 A bekannt.

### Stand der Technik

Das Feinreiben mit höheren Anforderungen auf die Formgenauigkeit der Löcher in Transferstraßen und Bearbeitungszentren wird in der Regel mit Reibahlen mit einem am Schneideteil aus austauschbaren Schneidplatten und zwei eingelöteten Stützplatten mit leitenden Längsstützflächen gemacht. Der grundsätzliche Nachteil dieser Lösung ist eine verhältnismäßig arbeitsintensive Einstellung der auszutauschenden Schneidplatten mittels spezieller Messvorrichtungen durch qualifizierte eingeschulte Bedienung. Ein weiterer Nachteil ist der verhältnismäßig schnelle Verschließ der Stützplatten, der zur sukzessiven Verschlechterung der Formgenauigkeit der geriebenen Löcher und dadurch zur vorzeitigen Aussonderung der ganzen relativ teuren Werkstücks führt. Die rechtzeitige Aussonderung der abgenützten Werkzeuge muss konsequent überwacht werden, besonders bei einer Massenproduktion in computergesteuerten Bearbeitungszentren oder Transferstraßen, um Havarien der Werkzeugeinheiten und unnötige Ausfallzeiten dieser teuren Produktionsanlagen zu vermeiden.

Die vorgenannten Mängel werden auch dadurch verstärkt, dass höhere Werkzeugdrehzahlen gegenüber mehrschneidigen Reibahlen notwendig sind, um eine hohe Produktivität zu erreichen.

Eine gewisse Möglichkeit ist, die Schneidplatte mit einer verschließfesten Beschichtung zu versehen. Das Verhältnis der optimalen Betriebsdauer bei unbeschichteten Stützplatten und beschichteten austauschbaren Schneidplatten wird dabei allerdings negativ beeinflusst. Das Konzept eines solchen Werkzeugs wird im Prinzip ineffizient. Eine eventuelle Verlängerung der Betriebsdauer der Stützplattenfassetten mit einer verschließfesten Beschichtung ist insbesondere bei Tiefreibahlen infolge deren erheblichen Länge unwirtschaftlich.

Anhand der vorgenannten Nachteile ist gewissermaßen besser die bekannte Lösung mit austauschbaren einschneidigen Schneidköpfen mit genau hergestellten Maßparametern der Zähne und länglichen Stützfassette. Der Benutzer braucht das Werkzeug nicht aufwendig einzustellen. Der Einspannzapfen eines solchen Schneidekopfes ist in der Regel mit einem Übermaß im Schaft eingelegt. Ein gewisser Nachteil dieser Lösung, insbesondere bei mittleren Werkzeugdurchmessern, ist der höhere Beschaffungspreis im Vergleich mit der Ahle mit der austauschbaren Schneidplatte.

In den Fällen, wo keine höhere Form- und Maßgenauigkeit erforderlich ist, besonders bei weniger tiefen Löchern, stellt die kleinere Leistung der einschneideigen Reibahlen im Vergleich mit üblichen mehrschneideigen Reibahlen einen weiteren Nachteil des vorgenannten Konzeptes dar.

Die verhältnismäßig vorteilhaftere Lösung dieser Problematik ist die Ausführung mit zwei austauschbaren Schneidplatten, die bei Werkzeugen für mittlere Lochdurchmesser verwendet wird.

Wichtiger als die schwierigere und aufwendigere Einstellung dieser Schneidplatten nach dem Austausch ist die Beschränkung ihrer Anzahl bei mittleren Werkzeugdurchmessern (bis 30 mm) auf zwei, insbesondere wegen der notwendigen räumlichen Anordnung der Befestigungsbacken und Einstellelemente, und aus demselben Grund auf eine austauschbare Schneidplatte bei kleinen Werkzeugdurchmessern (beispielsweise 6 mm). Für die Produktion ist ebenfalls die komplizierte Bauweise dieser Werkzeuge nachteilig.

### Wesen der Erfindung

Die vorgenannten Nachteile werden von einer Reibahle mit den Merkmalen des Anspruchs 1 im Wesentlichen beseitigt.

Ein ergänzendes Prinzip ist, dass die Längsschneiden nur aus zwei ebenen Flächen bestehen, von denen eine die Schneidestirn und die andere den Schneiderücken bildet.

Ein weiteres Prinzip ist, dass die Entfernung des Schnittpunktes der Längsschneide und der Stirnschneide von der Stirnebene bei den jeweiligen Zähnen in der Richtung der Arbeitsrotation sukzessiv zunimmt.

Ein anderes ergänzendes Prinzip ist, dass die beiden Längsstützflächen dieselbe Radiusentfernung von der Längsachse des Schneideteils haben, wobei die Längsschneiden mindestens am vorderen Teil eine ein wenig größere Radiusentfernung von der Längsachse des Schneideteils haben.

Ein ergänzendes Prinzip ist ebenfalls, dass ein zylinderförmiger, mit Übermaß im Schaft eingelegter Einspannzapfen aus gesintertem Hartmetall an die Formscheibe des Schneideteils anknüpft.

Ein alternatives Prinzip ist, dass der Einspannzapfen an eine Cermet-Formscheibe eingelötet ist.

Ein anderes alternatives Prinzip ist, dass der Einspannzapfen an eine Formscheibe aus Schneidkeramik eingelötet ist.

Ein ergänzendes Prinzip ist, dass bei dem Schneideteil, der durch eine Zentralzuführung des Kühl- und Schmiermittels befeuchtet wird, Befeuchtungsrillen in der Richtung der Werkzeugrotation durch Längsstützflächen gebildet werden.

Ein weiteres Prinzip ist, dass die Summe aller Ausgangsquerschnitte der Zentralzuführung des Kühl- und Schmiermittels zu Zahnlücken und Befeuchtungsrillen kleiner ist als jeder Querschnitt der inneren Leitung dieses Mittels.

### Übersicht der Abbildungen in Zeichnungen

Die Erfindung wird durch eine Zeichnung anschaulich gemacht, wo die Fig. 1 ein Beispiel der technischen Lösung im Teillängsschnitt zeigt. In der Fig. 2 wird diese Lösung im A-A-Schnitt dargestellt. Die Fig. 3 zeigt eine Variante dieser Lösung ebenfalls im A-A-Schnitt. Ein weiteres Beispiel ist der Fig. 4 im Teillängsschnitt und der Abbildung im B-B-Schnitt zu entnehmen.

### Beschreibung der Durchführungen

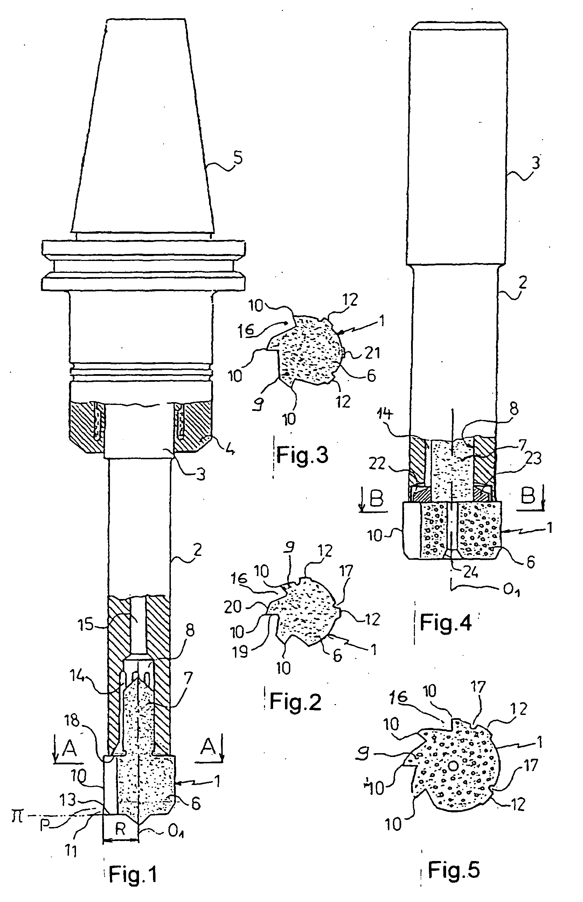

Die Durchführung gemäß der Fig. 1 und 2 besteht aus dem Schneideteil 1, dem Schaft 2 und dem Einspannzapfen 3, eingespannt mit dem Hydro-Spannzeug 4 im Spannkopf 5, der im nicht abgebildeten Spindel der Werkzeugmaschine eingespannt wird. Der Schneiteil 1 besteht aus der kompakten, aus gesintertem, abriebfest beschichtetem Hartmetall hergestellten Formscheibe 6 mit dem Einspannzapfen 7.

Der Einspannzapfen 7 ist mit Übermaß im Loch 8 im Stahlschaft 2 eingelegt. An der Formscheibe 6 befinden sich drei Zähne 9 mit Längsschneiden 10 und Stirnschneiden 11, deren Schnittpunkte P in der Richtung der Arbeitsrotation eine sukzessiv zunehmende Entfernung von der Stirnebene π aufweisen. An der Formscheibe 6 befinden sich außerdem zwei Längsstützflächen 12 mit der gleichen Radiusentfernung R von der Längsachse O₁ des Schneideteils 1. Die Radiusentfernung R der Längsschneiden 10 von der Längsachse O₁ in ihrem vorderen Teil 13 ist dabei nur wenig größer, beispielsweise um 0,01 mm, wobei die R der Längsschneiden 10 in der Richtung zum Werkzeugzapfen sukzessiv abnimmt. Im Loch 8 des Schaftes 2 sind 6 Längsrillen 14 für Zuführung des Kühl- und Schmiermittels aus dem Zentralkanal 15 zu den Zahnlücken 16 und den Befeuchtungsrillen 17 an den Stützflächen 12 hergestellt. Die Anzahl der Längsrillen kann in anderen Ausführungen abweichen, je nach der Durchmessergröße des Schaftes. Die Summe der Querschnitte aller Ausmündungen 18 der zentralen Zuführung des vorgenannten Mittels zu den Zahnlücken 16 und den Befeuchtungsrillen 17 ist kleiner als die Summe der Querschnitte der Längsrillen 14 und des Zentralkanals 15. Die Zähne 9 mit einer regelmäßigen Winkelteilung befinden sich in einer Hälfte des Umfangs der Formscheibe 6 und die Stützflächen 12 in der anderen Hälfte des Umfangs, und zwar mit einer Winkelteilung von 95°. Die mittlere Schneide 10 befindet sich gegenüber der Längsachse O₁ des Schneideteils 1 entgegen der gegenüberliegenden Stützfläche 12, was für Produktions- und Kontrollmessungen vorteilhaft ist. Die Längsschneiden 11 bestehen nur aus zwei ebenen Flächen, von denen eine die Schneidestirn 19 und die andere den Schneiderücken 20 bildet.

Die Durchführung gemäß der Fig. 3 ist im Wesentlichen eine Variante der vorgenannten Ausführung. Die Winkelteilung der Stützflächen beträgt 100°, und die Winkelteilung zwischen den äußeren Längsschneiden 10 und den Stützflächen 12 ist identisch. Entgegen der Längsachse O₁ des Schneideteils 1 befindet sich die Kontrollfassette 21 mit einer kleineren Radiusentfernung R als bei den Stützflächen 12.

Die Durchführung gemäß der ig. 4 und 5 besteht aus dem Einspannzapfen 3 des Schaftes 2, in dessen Loch 8 der Einspannzapfen 7 des Schneiteils 1 mit Übermaß eingelegt ist, die aus der Cermet-Formscheibe 6 besteht, mit dem eingelöteten Einspannzapfen 7 aus gesintertem Hartmetall. An der Formscheibe 6 befinden sich vier Längsschneiden 10, eine von ihnen befindet sich gegenüber der Längsachse O₁ des Schneideteils 1 genau entgegen der gegenüberliegenden Stützfläche 12, was für Produktions- und Kontrollmessungen vorteilhaft ist. In der Stirnhöhle 22 des Schaftes 2, in welche die Längsrillen 14 für Zuführung des Kühl- und Schmiermittels ausmünden, befindet sich ein Leitring 23, der eine gerichtete Strömung des genannten Mittels zu den Zahnlücken 16 und den Befeuchtungsrillen 17 sichert. Der Leitring 23 ist mit einem Zentrierkegel 24 versehen.

Zu den wichtigsten Vorteilen gehört eine hohe Formgenauigkeit des Reibens, die dem Prinzip der einschneidigen Reibahlen entspricht, wobei mehrere Schneiden eine erhebliche Produktivitätserhöhung ermöglichen - durch die Anzahl der Schneiden multipliziert.

Die verhältnismäßig niedrigen Produktionskosten und dadurch auch der Preis der austauschbaren Schneideteile gemäß dieser technischen Lösung ermöglichen in den meisten Fällen die abgenützten Schneideteile nicht mehr nachzuschärfen, sondern gleich mit neuen zu ersetzen.

Die Werkzeuge gemäß dieser technischen Lösung können mit erheblichem Vorteil in modernen computergesteuerten Werkstückmaschinen mit hoher Schnittgeschwindigkeit zum Feinreiben von sehr genauen Löchern verwenden, insbesondere in der Großserien- und Massenproduktion.

## Patentansprüche

1. Die Reibahle für Löcher mit kleinen und mittleren Durchmessern, die einen Einspannzapfen enthält, angepasst zum Einspannen in Spannmitteln der Werkzeugmaschinen, wobei an diesen Einspannzapfen ein Schaft mit einem angeschlossenen Schneideteil anknüpft, der mit zwei Längsstützflächen und länglichen Zähnen mit Stirnschneiden versehen ist, **dadurch gekennzeichnet, dass** der Schneideteil (1) aus einer Formscheibe (6) aus Schneidstoff besteht, die zum Schaft (2) befestigt ist, und in einer Umfanghälfte dieser Formscheibe (6) sind mindestens drei Zähne (9) mit Längsschneiden (10) hergestellt, in der gegenüberliegenden Umfang hälfte der Formscheibe (6) befinden sich zylinderförmige Längsstützflächen (12) mit einer Winkelteilung von 60° bis 140°.

2. Die Reibahle gemäß dem Schutzanspruch 1, **dadurch gekennzeichnet, dass** die Längsschneiden (10) nur aus zwei ebenen Flächen bestehen, von denen eine die Schneidestirn (19) und die andere den Schneiderücken (20) bildet.

3. Die Reibahle gemäß dem Schutzanspruch 2, **dadurch gekennzeichnet, dass** die Entfernung des Schnittpunktes (P) der Längsschneide (10) und der Stirnschneide (11) von der Stirnebene (π) bei den jeweiligen Zähnen (9) in der Richtung der Arbeitsrotation sukzessiv zunimmt.

4. Die Reibahle gemäß dem Schutzanspruch 3, **dadurch gekennzeichnet, dass** die beiden Längsstützflächen (12) dieselbe Radiusentfernung (R) von der Längsachse (O₁) des Schneideteils (1) haben, wobei die Längsschneiden (10) mindestens am vorderen Teil (13) eine ein wenig größere Radiusentfernung (R) von der Längsachse (O₁) des Schneideteils haben.

5. Die Reibahle gemäß einem der Schutzansprüche 1 bis 4, **dadurch gekennzeichnet, dass** ein zylinderförmiger, mit Übermaß im Loch (8) des Stahlschaftes (2) eingelegter Einspannzapfen (7) aus gesintertem Hartmetall an die Formscheibe (6) des Schneideteils (1) anknüpft.

6. Die Reibahle gemäß dem Schutzanspruch 5, **dadurch gekennzeichnet, dass** der Einspannzapfen (7) an eine Cermet-Formscheibe (6) eingelötet ist.

7. Die Reibahle gemäß dem Schutzanspruch 5, **dadurch gekennzeichnet, dass** der Einspannzapfen (7) an eine Formscheibe (6) aus Schneidkeramik eingelötet ist.

8. Die Reibahle gemäß einem der Schutzansprüche 1 bis 7, **dadurch gekennzeichnet, dass** bei dem Schneideteil (1), der durch eine Zentralzuführung des Kühl- und Schmiermittels befeuchtet wird, Befeuchtungsrillen (17) in der Richtung der Werkzeugrotation durch Längsstützflächen (12) gebildet werden.

9. Die Reibahle gemäß dem Schutzanspruch 8, **dadurch gekennzeichnet, dass** die Summe aller Ausgangsquerschnitte (18) der Zentralzuführung des Kühl- und Schmiermittels zu Zahnlücken (16) und Befeuchtungsrillen (17) kleiner ist als jeder Querschnitt der inneren Leitung dieses Mittels.

## Claims

1. Reamer for holes, especially holes having a small to medium size diameter consisting of a shaft for chucking into machine tools, a shank and cutting part where two leaning faces and longitudinal cutting teeths with front cutting blades are arraged **characterized in that** the cutting part (1) is made as a compact shaped disc (6) from the cutting material joined to the shank (2) and on that compact shaped disc (6) in one half of the periphery there are arranged at least three cutting teeth (9) with longitudinal cutting blades (10) and on the opposite half of the periphery of the shaped cutting disc (6) cylindrical leaning faces (12) are arranged with an angular spacing of 60° to 140° between them.

2. Reamer according to the claim 1, **characterized in that** the longitudinal cutting blades (10) are created only by two plain surfaces, one of them is a blade face (19) and the other is the blade land clearance (20).

3. Reamer according to the claim 2, **characterized in that** the distance of the point of intersection (P) of the longitudinal cutting blade (10) and the cutting face edge (11) from the front surface (π) by the cutting teeth (9) is growing gradually in the direction of the rotation.

4. Reamer according to the claim, **characterized in that** the both logitudinal leaning faces (12) have the same diameter distance (R) from the longitudinal axis (O₁) of the cutting part (1) and the longitudinal cutting blades (10), and that at least by the front part (13) the cutting blades (10) have the diameter distance (R) from the longitudinal axis (O₁) of the cutting part (1) a little bit grater.

5. Reamer according to the claims 1 to 4, **characterized in that** a cylindrical chucking shaft (7) from sintered carbide fastened in the hole (8) of the steel shank (2) with an interference is linked up on the compact shaped disc (6) of the cutting part (1).

6. Reamer according to the claim 5, **characterized in that** the chucking shaft (7) is brazed to the compact shaped disc (6) made of cermet.

7. Reamer according to the claim 5, **characterized in that** the chucking shaft (7) is brazed to the compact shaped disc (6) made of cutting ceramics.

8. Reamer according to the claims 1 to 7, **characterized in that** at the cutting part (1) irrigated by a central supply system of cooling and lubricating medium irrigation grooves (17) in front of the longitudinal supporting faces (12) in the direction of the tool rotation are provided.

9. Reamer according to the claim 8, **characterized in that** the sum of all output cross sections discharging holes (18) of the central supply system of cooling and lubricating medium to the teeth grooves (16) and irrigation grooves (17) is less than any cross section of the inner distributing system of that medium.

## Revendications

1. Alésoir pour trous, en particulier de petit et moyen diamètre, comportant un queue adapté au serrage dans les moyens de serrage des machines-outils, un corps d'outil lié au queue qui communique avec l'élément de coupe portant deux surfaces d'appui disposées sur son périmètre et les dents de coupe avec un taillants de coupe frontales, **caractérisé en ce que** l'élément de coupe (1) est constitué a la maniere d'un disque profilé (6) en matière coupante fixé au corps d'outil (2), ce disque profilé (6) portant sur une moitié de son périmètre au moins trois dents de coupe (9) avec les taillants de coupe longitudinales (10), sur l'autre moitié du périmètre du disque profilé (6) se trouvant les surfaces d'appui cylindriques longitudinales (12) avec un ecartement entre 60° et 140°.

2. Outil selon la revendication 1, **caractérisé en ce que** les taillants de coupe longitudinales (10) sont constituées de deux surfaces planes dont l'une est la face de coupe frontal (19) et l'autre la face en dépouille (20).

3. Outil selon la revendication 2, **caractérisé en ce que** la distance du point d'intersection (P) du taillant de coupe longitudinale (10) et du taillant de coupe frontale (11) de la surface frontale (π) des dents de coupe (9) s'agrandit progressivement dans le sens de rotation.

4. Outil selon la revendication 3, **caractérisé en ce que** les deux surfaces d'appui longitudinales (12) ont la même distance du diamètre (R) de l'axe longitudinal (O₁) d'élément de coupe (1), et les taillants de coupe longitudinales (10), au moins leur face avant (13), ayant la distance du diamètre (R) de l'axe longitudinal (O₁) un peu plus grand.

5. Outil selon l'une quelconque des revendications 1 à 4, **caractérisé en ce que** à le disque profilé (6) d'element de coupe (1) le queue de serrage (7) fait au carbure metalliques est attaché qui est disposé dans un trou (8) du corps d'outil (2) avec un enjambement.

6. Outil selon la revendication 5, **caractérisé en ce que** le queue de serrage (7) est soudeé au disque profilé (6) fait de cermet.

7. Outil selon la revendication 5, **caractérisé en ce que** le queue de serrage (7) est soudeé au disque profilé (6) fait de céramique coupante.

8. Outil selon l'une des revendications 1 à 7, **caractérisé en ce que** d'element de coupe (1) arrosée par l'alimentation centrale en fluide de refroidissement et de lubrification porte les rainures d'arrosage (17) dans le sens de rotation de l'outil avant les surfaces d'appui longitudinales (12).

9. Outil selon la revendication 8, **caractérisé en ce que** la somme de toutes les sections de sortie de la bouche (18) de l'alimentation centrale en fluide de refroidissement et de lubrification dans les espaces entre les dents (16) et dans les rainures d'arrosage (17) est inférieure à la section transversale de la distribution interne du fluide.
